# DEMANDE DE BREVET EUROPEEN

(11) **EP 0 753 730 A1**
(43) Date de publication de la demande: **15.01.1997**
(21) Numéro de dépôt: 96420236.0
(22) Date de dépôt: 12.07.1996
(51) Int. Cl.: G01M 3/38

(54) **Procédé et dispositif pour détecter optiquement un défaut d'herméticité d'un récipient contenant un liquide gazeux**

(30) Priorité: 12.07.1995 FR 9508690
(71) Demandeur: VERRERIES SOUCHON NEUVESEL - VSN, F-69611 Villeurbanne Cedex (FR)
(72) Inventeur: Ougier, Thierry, 69700 St. Jean de Touslas (FR); Zhang, Ruo Dan, 69100 Villeubanne (FR)
(74) Mandataire: Thibault, Jean-Marc

(57) **Abrégé**

- L'objet de l'invention concerne un procédé pour détecter optiquement un défaut d'herméticité d'un récipient contenant un liquide gazeux.
- Selon l'invention, le procédé consiste :
   . à déterminer sur une image (**I**) du col d'un récipient, au moins une zone d'inspection (**Z**_{**1**}) s'établissant au moins au-dessus du niveau normal de remplissage du récipient,
   . à effectuer une analyse du contraste et de la luminosité de l'image, afin de déterminer la présence ou non d'une mousse dans la zone d'inspection,
   . et à comparer les résultats de l'analyse avec un seuil, en vue d'apprécier si le récipient est affecté ou non d'un défaut d'herméticité.

## Description

La présente invention concerne le domaine technique du contrôle par voie optique de l'herméticité ou de l'étanchéité d'un récipient de nature translucide ou transparente et contenant un liquide gazeux au sens général.

L'objet de l'invention trouve une application particulièrement avantageuse pour contrôler la qualité d'étanchéité d'un récipient, tel qu'une bouteille, fermé à l'aide d'un bouchon ou d'une capsule et contenant un liquide gazeux tel qu'une boisson gazeuse alcoolisée ou non, comme par exemple de la bière, du champagne ou une boisson gazéifiée à base de fruits ou de plantes.

Dans le domaine technique de l'embouteillage, il est généralement procédé, au terme de cette opération, à une inspection afin de vérifier l'herméticité des récipients et de détecter des bouteilles défectueuses appelées usuellement dans la technique, "fuyardes" ou "couleuses". Le défaut d'étanchéité des bouteilles peut provenir, d'une manière générale, soit de la qualité des bouteilles et/ou des bouchons ou capsules de fermeture, soit d'un défaut affectant la machine de pose des bouchons ou capsules. L'opération de contrôle de l'étanchéité des bouteilles est importante car elle permet d'éviter la commercialisation de récipients dont le contenu aurait perdu ses qualités gustatives. Par ailleurs, cette inspection s'avère essentielle puisque les bouteilles défectueuses sont à même de représenter un réel danger pour l'utilisateur, dans la mesure où le défaut peut provenir d'une altération de l'intégrité du goulot du récipient qui est, habituellement, en verre.

Dans l'état de la technique, cette opération de contrôle est, en général, réalisée par une personne prélevant, en sortie de la machine d'embouteillage, des échantillons et observant si les bouteilles présentent ou non une mousse au-dessus du niveau du liquide. En effet, la présence d'une mousse dans une bouteille, appelée également col blanc, est interprétée comme correspondant à une fuite.

Il s'avère que cette technique de contrôle présente une première limitation tenant au fait qu'elle ne peut être menée à bien que sur des échantillons, car le temps de contrôle est trop long pour permettre une inspection de l'ensemble d'une production industrielle. Plus fondamentalement, une deuxième limitation apparaît au niveau de la qualité du contrôle effectué. En effet, il s'avère difficile en pratique, dans certains cas, d'apprécier si la mousse qui est toujours présente dans le col, correspond ou non à une fuite.

Il apparaît donc le besoin de disposer d'une technique adaptée pour détecter une fuite d'un récipient contenant un liquide gazeux et permettant, d'une part, de contrôler la totalité d'une production industrielle et, d'autre part, de repérer sans erreur un récipient défectueux.

Dans l'état de la technique, il est connu, par ailleurs, par le brevet **US A 5 414 778**, un procédé et un dispositif d'analyse optique d'un liquide gazeux contenu dans une bouteille, en vue d'en déduire, notamment, un défaut d'étanchéité. Un tel procédé vise à détecter l'activité des bulles présentes dans le liquide et résultant du dégazage du liquide, en prenant plusieurs images du col de la bouteille à des intervalles de temps rapprochés. L'analyse dynamique de l'activité de dégazage du liquide gazeux donne une indication concernant la qualité finale et la quantité du produit à l'intérieur de la bouteille et un éventuel défaut de bouchage de la bouteille. La mise en oeuvre pratique d'un tel procédé pose un certain nombre de problèmes, dans la mesure où elle impose de prendre une série d'images dans un intervalle de temps relativement court correspondant à la phase instable de dégazage d'un liquide. Dans le même sens, une telle technique impose un traitement de plusieurs images pour contrôler l'étanchéité de chacune des bouteilles. Par ailleurs, il semble que le critère de discrimination entre une bouteille étanche et non étanche soit difficile à déterminer.

L'objet de l'invention vise à remédier aux divers inconvénients des techniques antérieures en proposant une méthode pour détecter, de manière fiable, sur une ligne de fabrication industrielle, une fuite d'un récipient contenant un liquide gazeux.

L'objet de l'invention vise également à proposer un procédé pour détecter un défaut d'étanchéité d'un récipient, de mise en oeuvre relativement sûre, rapide et simple.

L'objet de l'invention vise donc à proposer un procédé pour détecter optiquement un défaut d'étanchéité d'un récipient contenant un liquide gazeux, à partir de l'analyse d'une image comportant au moins une zone d'inspection située au niveau du col du récipient, et consistant :
- à déterminer sur une image du col d'un récipient, au moins une zone d'inspection s'établissant au moins au-dessus du niveau normal de remplissage du récipient,
- à effectuer une analyse du contraste et de la luminosité de l'image, afin de déterminer la présence ou non d'une mousse dans la zone d'inspection,
- et à comparer les résultats de l'analyse avec un seuil, en vue d'apprécier si le récipient est affecté ou non d'un défaut d'herméticité.

L'analyse optique de la mousse contenue dans le col des bouteilles permet de déterminer la structure de la mousse et, par suite, d'en déduire un défaut d'étanchéité.

Selon une caractéristique préférée de mise en oeuvre de l'invention, le procédé consiste :
- à effectuer, pour la première zone d'inspection, d'une part, une analyse du niveau de gris de l'image pour en déduire la présence ou non d'une mousse dense et, d'autre part, une analyse des variations des niveaux gris de l'image et de sa structure, en vue d'en déduire la présence ou non d'une mousse peu dense,
- et à comparer à des seuils, le niveau de gris et les variations des niveaux de gris.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est un schéma simplifié illustrant un dispositif de contrôle conforme à l'invention.

La **fig. 2** est une vue en coupe prise sensiblement selon les lignes II-II de la **fig. 1**.

Les **fig. 3** à **8** sont des exemples d'images montrant différents défauts détectés par l'objet de l'invention.

La **fig. 9** est une coupe transversale prise selon les lignes A-A de la **fig. 1** et montrant un détail caractéristique du dispositif de contrôle conforme à l'invention.

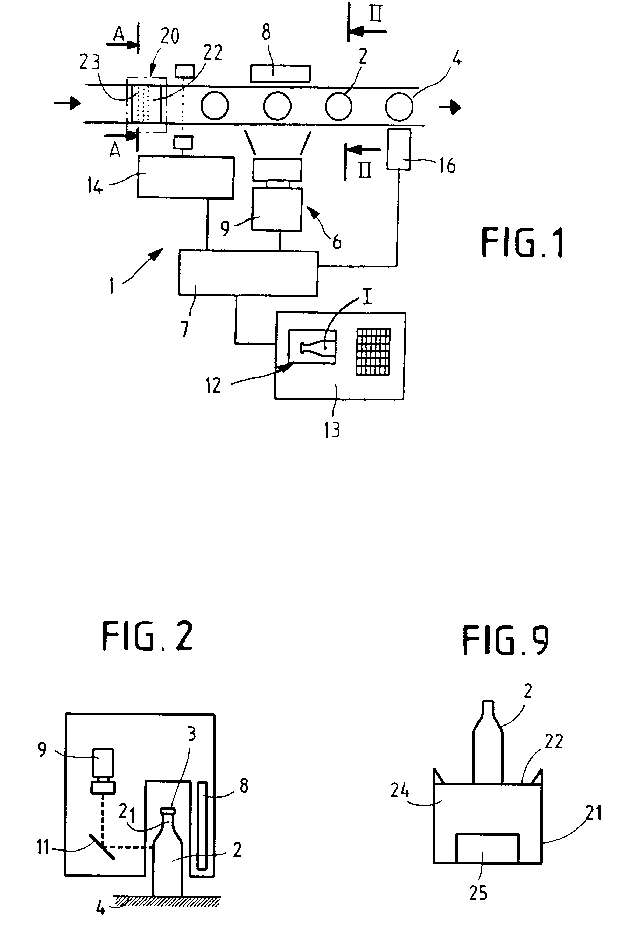

Tel que cela apparaît aux **fig. 1** et **2**, le dispositif **1** selon l'invention est apte à permettre le contrôle de récipients **2** réalisés en un matériau transparent ou translucide et destinés à contenir un liquide gazeux au sens général. Dans l'exemple illustré, les récipients **2** sont des bouteilles réalisées en verre et contenant une boisson gazeuse, alcoolisée ou non. Le dispositif **1** est conçu pour détecter un défaut d'herméticité des récipients **2** normalement obturés par un bouchon ou une capsule **3**.

Les récipients **2** sont déplacés par un convoyeur **4**, en vue de défiler devant le dispositif de détection **1** conforme à l'invention. Le dispositif de détection **1** comporte un système optique de prise d'images **6**, relié à une unité **7** d'analyse et de traitement des images prises par le système **6**.

Dans l'exemple de réalisation illustré, le système optique de prise d'images **6** comporte un moyen d'éclairage **8** délivrant un faisceau lumineux destiné à éclairer temporairement au moins la partie supérieure des récipients amenés successivement par le convoyeur **4**. Le système optique **6** comporte également un système de réception **9** des faisceaux lumineux traversant le récipient et récupérés, par exemple, par un miroir de renvoi **11**. Le système de réception **9** est constitué par une caméra matricielle CCD recevant l'image de la partie haute du récipient.

Dans l'exemple illustré, il est à noter que la caméra **9** et la lampe d'éclairage **8** sont disposées de part et d'autre des récipients **2**. Cette disposition est possible pour analyser, par transparence, un liquide de nature translucide. Bien entendu, si le liquide contenu dans les récipients **2** est opaque, il peut être prévu d'analyser les faisceaux lumineux réfléchis et émis par la lampe **8** placée du même côté que la caméra **9**. De préférence, le système optique **6** est adapté de manière à faire apparaître sur un écran **12** d'un pupitre **13**, une image **I** d'une bouteille **2**, placée selon une direction horizontale, afin d'obtenir une meilleure utilisation de la surface de la caméra.

La caméra **9** transmet ses informations à l'unité d'analyse et de traitement **7** comportant un circuit d'acquisition délivrant des signaux représentatifs de l'intensité lumineuse reçue par chacune des cellules photosensibles de la caméra et correspondant aux images prises. Le circuit d'acquisition assure la conversion des signaux analogiques en signaux numériques codés sur un certain nombre de bits suivant une échelle de gris déterminée. Le circuit d'acquisition contient également une mémoire permettant de stocker les informations relatives aux images et se trouve commandé par une unité centrale reliée à un système **14** de détection de la présence d'une bouteille **2**. Le système de détection **14**_{,} placé en entrée du dispositif de contrôle **1**, permet de synchroniser la prise d'images et le passage des bouteilles en position d'alignement avec la caméra **9**.

L'unité **7** d'analyse et de traitement des images comporte, notamment, des moyens permettant de sélectionner au moins une et, de préférence, une série de zones d'inspection de la bouteille **2**, situées au niveau du col **2**_{**1**} des bouteilles. L'unité **7** prend ainsi en compte certaines parties de l'image du col de la bouteille, dont les limites seront précisées dans la suite de la description. L'unité **7** comporte également des moyens d'analyse de la luminosité et du contraste de l'image prise dans la ou les zones d'inspection. L'analyse de la luminosité et du contraste de l'image permet, en comparaison de valeurs de seuil, d'apprécier si le récipient est affecté ou non d'un défaut d'herméticité.

Le système de contrôle selon l'invention offre la possibilité de détecter une fuite des bouteilles en analysant les zones claires et sombres de l'image prise pour chaque bouteille, c'est-à-dire la structure ou la contexture de la mousse contenue dans le col des bouteilles, au-dessus du niveau du liquide. Cette structure de la mousse, qui est le reflet ou la manifestation d'une fuite, permet de mettre en évidence différents défauts.

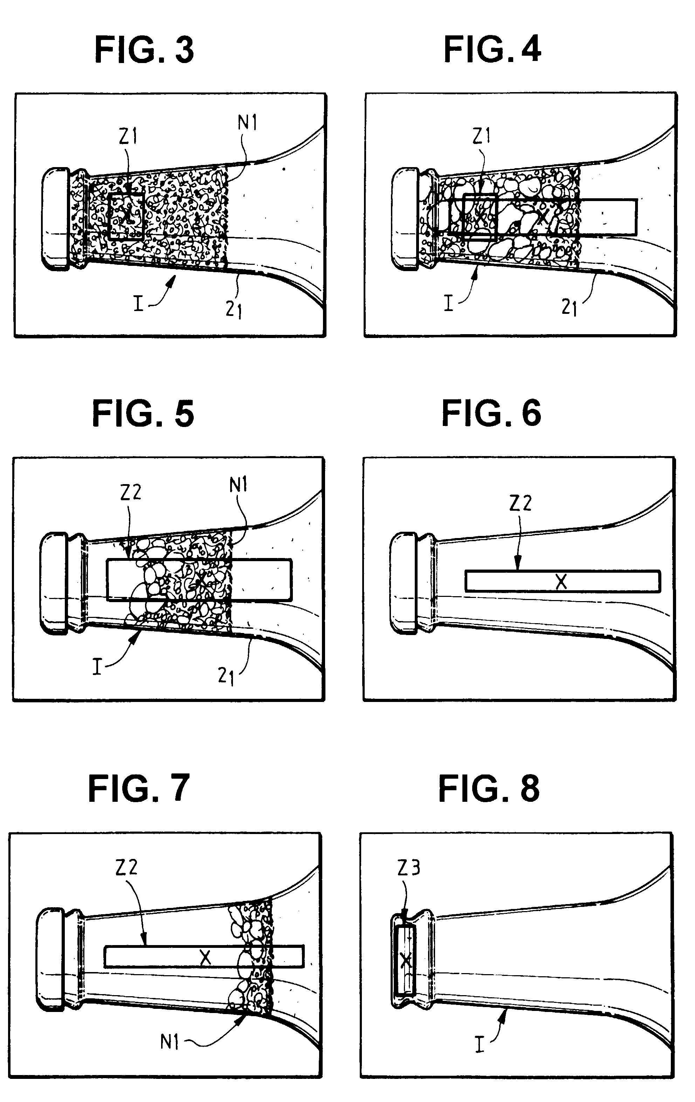

La **fig. 3** illustre un exemple de réalisation d'un procédé permettant de détecter la présence ou non d'une mousse dense dans le col **2**_{**1**} d'un récipient. Tel que cela ressort de la **fig. 3**, il est prévu de sélectionner dans l'image **I** du col de la bouteille une première zone ou fenêtre d'inspection **Z**_{**1**} du récipient, située dans le col **2**_{**1**} de la bouteille au-dessus du niveau normal **N**_{**1**} de liquide ou de remplissage du récipient. Pour détecter un défaut de mousse dense, la zone **Z**_{**1**} doit se trouver dans le col, le plus haut possible, mais en-dessous de la bague et doit être moins large que le col pour éviter les effets d'ombre. L'image d'un col correct, c'est-à-dire sans mousse, est claire au milieu et contrastée sur les bords. La présence de mousse dans le col rend le milieu du col plus sombre ou opaque, tel que cela ressort clairement de la **fig. 3.** Ceci est dû au fait que la mousse ne permet pas à toute la lumière de passer, contrairement à un col exempt de mousse.

Le procédé selon l'invention consiste donc à effectuer, pour l'image prise dans la première zone d'inspection **Z**_{**1**}, une analyse de la luminosité ou du niveau de gris de l'image pour en déduire la présence ou non d'une mousse dense. Il doit donc être considéré que pour une bouteille hermétique, l'image d'un col est claire. Le niveau de gris de la fenêtre de détection est comparé avec un seuil qui traduit la clarté de la zone. Plus la valeur du seuil est faible, plus la fenêtre est claire. Inversement, plus le seuil présente une valeur élevée, plus la fenêtre est sombre. Pour un seuil variant entre 1 et 9, il peut être considéré qu'un récipient présente un défaut de mousse dense, si la valeur mesurée dans la zone **Z**_{**1**} dépasse le seuil fixé autour de la valeur 5. Bien entendu, la valeur du seuil de détection est réglable.

Le procédé selon l'invention vise également à permettre de détecter un défaut d'une mousse peu dense présente à l'intérieur du col de la bouteille. La présence d'une mousse peu dense apparaît, notamment, pour une fuite moins prononcée par rapport à celle se manifestant par une mousse dense. Pour détecter ce type de mousse, le procédé selon l'invention consiste à analyser les variations des niveaux de gris de l'image apparaissant dans une zone d'inspection déterminée, située également dans le col de la bouteille. Cette zone d'inspection peut être similaire ou non à la zone d'inspection **Z**_{**1**} utilisée pour la détection de la mousse dense. Le procédé consiste donc à détecter des variations d'intensité de la lumière, liées à la présence de traînées de mousse ou de grosses bulles de mousse, comme cela apparaît clairement à la **fig. 4**. Cette analyse du contraste de l'image permet de déterminer un critère correspondant à la non uniformité de l'intensité de la lumière à l'intérieur de la zone d'inspection considérée. Ainsi, plus ce critère présente une valeur élevée, plus sont importantes les variations d'intensité dues à la présence de la mousse. Inversement, plus le critère présente une valeur faible, plus les variations d'intensité sont faibles.

De préférence, pour rendre l'analyse plus discriminante, le procédé consiste à analyser le contour des bulles présentes dans la mousse et à comparer le résultat de l'analyse à un seuil, afin d'en déduire la présence ou non d'une mousse peu dense. Selon un exemple de réalisation, l'analyse du contour des bulles est effectuée en prenant en compte les segments des bulles correspondant à une valeur donnée de la variation du contraste, en calculant le nombre de ces segments et en comparant ce nombre à une valeur, afin de permettre de déceler un défaut de mousse peu dense. La valeur du seuil est réglable. Selon un autre exemple de réalisation, l'analyse du contour des bulles peut être réalisée par la mesure du périmètre total des contours des bulles présentes dans la mousse.

La **fig. 5** illustre une autre caractéristique du procédé selon l'invention, consistant à détecter l'épaisseur de la mousse dans le col d'une bouteille. A cet effet, le circuit d'analyse et de traitement **7** permet de sélectionner dans l'image **I** du col de la bouteille, une deuxième zone **Z**_{**2**} d'inspection du récipient s'étendant de part et d'autre du niveau normal **N**_{**1**} de remplissage du récipient. Cette fenêtre d'inspection **Z**_{**2**} est centrée de préférence sur l'axe de la bouteille, afin d'éviter les problèmes de reflets sur les bords et s'étend sur la majeure partie de la hauteur du col en évitant les zones perturbées comme la bague. Le procédé consiste à effectuer, pour l'image prise dans cette deuxième zone d'inspection, une analyse des transitions apparaissant entre les niveaux de gris. En effet, il doit être considéré qu'en dessous du niveau du liquide, l'image du liquide est claire. Le niveau se distingue par un changement d'intensité lumineuse et plus exactement par une diminution du niveau d'intensité lumineuse. Le niveau du liquide correspond donc à une transition du clair vers le foncé. Cette recherche de limite de mousse est fiabilisée, après la détection de la variation de contraste, par une analyse de la continuïté de la zone sombre dans la mousse. De même, il apparaît une transition entre le niveau supérieur de la mousse et la partie restante du col ne comportant pas de mousse. L'épaisseur de mousse correspond donc à la distance entre le niveau du liquide et le point de transition entre la mousse et la partie du col non occupée par la mousse. L'épaisseur de mousse mesurée est comparée à une première valeur de seuil, dite maximum, au-dessus de laquelle la bouteille est considérée comme présentant une fuite. En effet, une bouteille non étanche présente une épaisseur de mousse supérieure à la normale. L'épaisseur de mousse mesurée est comparée à une deuxième valeur de seuil, dite minimum, en dessous de laquelle la bouteille est aussi considérée comme présentant une fuite, car le liquide ne contient plus de gaz (absence de mousse). Il doit être considéré que les valeurs de seuil sont réglables en fonction de la nature du liquide et des paramètres du procédé d'embouteillage.

Il doit être considéré que le procédé décrit ci-dessus permet de connaître le niveau du liquide et, par suite, de détecter l'absence d'un niveau de liquide, tel qu'illustré à la **fig. 6**, ou un niveau de liquide trop bas (**fig. 7**).

Par ailleurs, le traitement effectué ci-dessus, consistant à analyser les transitions entre les niveaux de gris, permet d'obtenir un critère correspondant à la force de la transition entre une zone claire et une zone sombre. Pour une variation possible du critère entre les bornes 1 et 9, plus le critère se rapproche de 0, plus la transition sera considérée faible. Par contre, plus le critère est éloigné de 0, plus une transition forte est à considérer. Pour être le plus précis possible, il est donc préférable de détecter les transitions faibles et donc de régler le seuil aux environs de la valeur 2.

Le procédé selon l'invention permet de détecter un défaut d'étanchéité des bouteilles en prenant une image **I** pour chaque bouteille et en procédant à une analyse statique de la mousse présente au-dessus du niveau du liquide. La détection d'une bouteille défectueuse peut donc être réalisée lorsqu'au moins l'une des valeurs de seuil précédemment définies a été dépassée. Ainsi, les bouteilles **2** sont considérées défectueuses, lorsque elles présentent une mousse dense, une mousse peu dense et/ou une épaisseur de mousse trop importante ou trop faible. Lorsque l'un au moins de ces défauts est détecté, l'unité de traitement et d'analyse **7** envoie un signal de commande à un système d'éjection **16** situé à la sortie du système de contrôle selon l'invention. Il est clair que l'unité **7** émet aussi un signal d'éjection, lorsque le niveau du liquide est trop bas (**fig. 7**) ou non détecté (**fig. 6**).

L'objet de l'invention présente également l'avantage de permettre de détecter la présence du bouchon ou de la capsule **3** de fermeture de la bouteille. A cet effet, le circuit de traitement et d'analyse **7** sélectionne, dans l'image **I** du col de la bouteille, une troisième zone d'inspection **Z**_{**3**} située à l'intérieur de l'emplacement du bouchon, comme cela ressort de la **fig. 8**. Le circuit **7** effectue, pour l'image prise dans cette zone **Z**_{**3**}, une analyse du niveau de gris qui est comparé à une valeur de seuil déterminée. Il est à considérer que l'absence de bouchon se traduit par une zone claire, tandis que la présence d'un bouchon correspond à une zone sombre.

La mise en oeuvre du procédé selon l'invention impose, bien entendu, une opération de réglage ou de paramétrage consistant, notamment, à la définition des zones d'inspection en fonction du type de bouteilles à contrôler et au choix des valeurs des seuils de détection qui dépendent, notamment, de la transparence du liquide et du matériau constitutif de la bouteille.

Selon une caractéristique préférée de mise en oeuvre de l'invention, le procédé consiste à assurer une agitation des bouteilles **2** avant la prise des images **I**. Cette agitation permet d'accentuer le phénomène de formation de mousse à l'intérieur du col des bouteilles, ce phénomène étant d'autant plus important ou marqué pour une bouteille non hermétique. Il apparaît donc qu'une agitation préalable du liquide contenu dans la bouteille permet de mieux caractériser la présence d'une mousse correspondant à une bouteille défectueuse et, par suite, de faciliter la détection d'une bouteille défectueuse. L'agitation de la bouteille peut être de nature mécanique ou, avantageusement, réalisée par des ultrasons créant une micro-agitation du liquide.

Les **fig. 1** et **9** permettent d'illustrer la mise en oeuvre d'un poste **20** d'activation de mousse par ultrasons, placé en amont du système de prise d'images **6**, considéré dans le sens de défilement des récipients **2**. Le poste d'activation **20** est constitué avantageusement par une cuve **21** fermée à sa partie supérieure par une plaque **22** percée de trous **23** et sur laquelle le fond des récipients **2** repose lors de leur défilement. La cuve **21** est remplie d'un liquide **24**, tel que de l'eau, qui est mise en cavitation à l'aide de transducteurs ultrasoniques **25** placés dans la cuve. L'alimentation en eau de la cuve **24** est telle que l'eau sort par les trous **23** assurant l'humidification du fond des récipients **2**, permettant un transfert des ultrasons au liquide contenu dans le récipient. Il s'ensuit une micro-agitation du liquide conduisant à l'activation de la mousse. La plaque **22** est montée pour être insérée dans le chemin de transport des récipients en étant inclinée ou horizontale.

## Revendications

1. Procédé pour détecter optiquement un défaut d'herméticité d'un récipient (**2**) contenant un liquide gazeux, à partir de l'analyse d'une image (**I**) comportant au moins une zone d'inspection (**Z**_{**1**}**, Z**_{**2**}**, Z**_{**3**}) située au niveau du col du récipient, caractérisé en ce qu'il consiste :
- à déterminer sur une image (**I**) du col d'un récipient au moins une zone d'inspection (**Z**_{**1**}**, Z**_{**2**}**, Z**_{**3**}) s'établissant au moins au-dessus du niveau normal de remplissage du récipient,
- à effectuer une analyse du contraste et de la luminosité de l'image, afin de déterminer la présence ou non d'une mousse dans la zone d'inspection,
- et à comparer les résultats de l'analyse avec un seuil, en vue d'apprécier si le récipient est affecté ou non d'un défaut d'herméticité.

2. Procédé selon la revendication 1, caractérisé en ce qu'il consiste :
- à effectuer, pour la première zone d'inspection (**Z**_{**1**}), d'une part, une analyse du niveau de gris de l'image pour en déduire la présence ou non d'une mousse dense et, d'autre part, une analyse des variations des niveaux gris de l'image et de sa structure, en vue d'en déduire la présence ou non d'une mousse peu dense,
- et à comparer à des seuils, le niveau de gris, et les variations des niveaux de gris.

3. Procédé selon la revendication 2, caractérisé en ce qu'il consiste, pour la première zone d'inspection (**Z**_{**1**}) de l'image, à analyser le contour des bulles présentes dans la mousse et à comparer le résultat de l'analyse à un seuil, afin d'en déduire la présence ou non d'une mousse peu dense.

4. Procédé selon la revendication 1, caractérisé en ce qu'il consiste :
- à déterminer une image prise sur au moins une deuxième zone d'inspection (**Z**_{**2**}) du récipient s'étendant de part et d'autre d'un niveau normal de remplissage du récipient,
- à effectuer, pour la deuxième zone d'inspection (**Z**_{**2**}), une analyse des transitions entre les niveaux de gris pour en déduire l'épaisseur d'une mousse,
- et à comparer à un seuil, les transitions entre les niveaux de gris.

5. Procédé selon la revendication 4, caractérisé en ce qu'il consiste, pour la deuxième zone d'inspection (**Z**_{**2**}) de l'image, à effectuer une analyse de la continuité d'une zone sombre, après la détection de la variation de contraste, pour en déduire l'épaisseur d'une mousse.

6. Procédé selon la revendication 4 ou 5, caractérisé en ce qu'il consiste :
- à effectuer, pour la deuxième zone d'inspection (**Z**_{**2**}), une analyse des transitions entre les niveaux de gris pour déterminer le niveau du liquide gazeux,
- et à comparer à un seuil, le niveau mesuré pour apprécier s'il correspond à un niveau normal ou non.

7. Procédé selon la revendication 1, caractérisé en ce qu'il consiste :
- à déterminer sur l'image prise, une troisième zone d'inspection (**Z**_{**3**}) du récipient, située à l'intérieur de l'emplacement du bouchon de fermeture du récipient,
- à effectuer, pour la troisième zone d'inspection, une analyse du niveau de gris pour en déduire la présence ou l'absence du bouchon,
- et à comparer à un seuil, le niveau mesuré pour déterminer la présence ou l'absence du bouchon.

8. Procédé selon l'une des revendications 1 à 7, caractérisé en ce qu'il consiste à émettre un signal de rejet dès qu'au moins un seuil est dépassé par les mesures de contraste réalisées.

9. Procédé selon l'une des revendications 1 à 8, caractérisé en ce qu'il consiste, avant la prise d'images (**I**), à assurer une agitation du liquide contenu dans le récipient (**2**), afin d'accentuer le phénomène de formation de mousse.

10. Dispositif pour détecter un défaut d'herméticité d'un récipient (**2**) contenant un liquide gazeux, le dispositif comportant un système optique (**6**) de prise d'images et une unité (**7**) d'analyse et de traitement des images prises par le système optique, caractérisé en ce que l'unité (**7**) d'analyse et de traitement comporte :
- des moyens de détermination sur une image (**I**) du col d'un récipient, au moins une zone d'inspection de l'image prise, s'établissant au moins au-dessus du niveau normal de remplissage du récipient,
. des moyens d'analyse de la luminosité et du contraste de l'image prise dans la zone d'inspection,
. et des moyens de comparaison entre les mesures et un seuil pour permettre d'apprécier si le récipient est affecté ou non d'un défaut d'herméticité.

11. Dispositif selon la revendication 10, caractérisé en ce que les moyens d'analyse du contraste de l'image comporte des moyens d'analyse du niveau de gris de l'image et des moyens d'analyse des variations des niveaux de gris de l'image et de sa structure pour permettre d'en déduire la présence ou non, respectivement, d'une mousse dense ou peu dense.

12. Dispositif selon la revendication 10 ou 11, caractérisé en ce que les moyens d'analyse du contraste de l'image comportent des moyens d'analyse des transitions entre les niveaux de gris et, éventuellement, de la continuité d'une zone sombre après la détection de variation de contraste, pour en déduire l'épaisseur d'une mousse.

13. Dispositif selon la revendication 10, caractérisé en ce que les moyens de comparaison délivrent un signal de commande à un système d'éjection (**16**) d'un récipient, lorsqu'au moins un seuil est dépassé par les mesures effectuées.

14. Dispositif selon la revendication 10, caractérisé en ce qu'il comporte, en amont du système optique de prise d'images, une cuve (**21**) d'activation de la mousse à l'intérieur du récipient (**2**), pourvue d'une plaque (**22**) percée de trous (**23**) sur laquelle défilent les récipients, la cuve (**21**) étant remplie d'un liquide (**24**) mis en cavitation par des transducteurs ultrasoniques (25) et sortant par les trous de la plaque, afin d'assurer l'humidification du fond du récipient.
